# EUROPEAN PATENT APPLICATION

(11) **EP 4 492 898 A1**
(43) Date of publication of application: **15.01.2025**
(21) Application number: 22930257.5
(22) Date of filing: 08.03.2022
(51) Int. Cl.: H04W 72/12

(54) **METHOD FOR SENDING ADDITIONAL DEMODULATION REFERENCE SIGNAL (DMRS) AND APPARATUS THEREOF**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/079798
(87) International publication number: WO 2023/168611

(57) **Abstract**

Disclosed in embodiments of the present disclosure are a method for sending an additional demodulation reference signal (DMRS) and an apparatus thereof. The method comprises: when an additional DMRS is configured in a scheduling time unit, sending to a terminal device a transmission frequency parameter of the additional DMRS, so as to instruct the terminal device to send, according to the transmission frequency parameter, the additional DMRS on a configured-grant physical uplink shared channel (CGPUSCH) (S21), wherein the transmission frequency parameters used for reducing the number of transmissions of the additional DMRS. According to the embodiments of the present disclosure, information is sent to the terminal device, so that the terminal device may send, according to the transmission frequency parameter of the additional DMRS indicated by a network device, the additional DMRS on the CG PUSCH, and thus, the transmission frequency of the additional DMRS can be reduced in the case that a channel change is relatively not drastic enough and the moving speed is a medium-low speed, thereby reducing the transmission overhead, and improving the system performance and the transmission efficiency.

## Description

### TECHNICAL FIELD

The present disclosure relates to the communication technology field, and in particular to a method and apparatus for sending an additional demodulation reference signal (DMRS).

### BACKGROUND

At present, a one-time configuration and multiple-use mechanism for configuring a demodulation reference signal (DMRS) in the scheduling of a configured-grant physical uplink shared channel (CG PUSCH) is adopted in the protocol. If an additional demodulation reference signal (DMRS) is configured, the configured DMRS will also be sent in each PUSCH transmission during the transmission cycle. For the case where the DMRS is configured with 2 symbols, the overhead is significant, so it is necessary to consider how to reduce the DMRS overhead to improve a system performance and a transmission efficiency.

### SUMMARY

Embodiments of the present disclosure provide a method and apparatus for sending an additional demodulation reference signal (DMRS). The terminal may send the additional DMRS on the CG PUSCH according to the transmission frequency parameter of the additional DMRS indicated by the network device. Thus, it is possible to reduce the transmission frequency of the additional DMRS when channel changes are relatively less severe and a moving speed is medium or low, thereby reducing a transmission overhead and improving a system performance and a transmission efficiency.

According to a first aspect, embodiments of the present disclosure provide a method for sending an additional demodulation reference signal (DMRS), performed by a network device. The method includes: in case that an additional DMRS is configured in the scheduling time unit, sending a transmission frequency parameter of the additional DMRS to a terminal, so as to indicate the terminal to send the additional DMRS on a configured-grant physical uplink shared channel (Configured-Grant PUSCH) according to the transmission frequency parameter. The transmission frequency parameter is used for decreasing a number of transmissions of the additional DMRS.

The embodiments of the present disclosure provide a method for sending the additional DMRS. By sending information to the terminal, the terminal may send the additional DMRS on the CG PUSCH according to the transmission frequency parameter of the additional DMRS indicated by the network device. Thus, it is possible to reduce the transmission frequency of the additional DMRS when channel changes are relatively less severe and a moving speed is medium or low, thereby reducing a transmission overhead and improving a system performance and a transmission efficiency.

According to a second aspect, embodiments of the present disclosure provide a method for sending an additional demodulation reference signal (DMRS), performed by a terminal. The method includes: receiving a transmission frequency parameter of the additional DMRS sent by a network device, in which the transmission frequency parameter is used for decreasing a number of transmissions of the additional DMRS on a Configured-Grant PUSCH; and sending the additional DMRS on the Configured-Grant PUSCH to the network device according to the transmission frequency parameter.

Embodiments of present disclosure provide a method for sending the additional DMRS. By receiving information sent by the network device, the terminal may send the additional DMRS on the CG PUSCH according to the transmission frequency parameter of the additional DMRS indicated by the network device. Thus, it is possible to reduce the transmission frequency of the additional DMRS when channel changes are relatively less severe and a moving speed is medium or low, thereby reducing a transmission overhead and improving a system performance and a transmission efficiency.

According to a third aspect, embodiments of the present disclosure provide a communication apparatus. The communication apparatus has some or all of the functions of the network device in the method examples described in the first aspect above. For example, the communication apparatus may have some or all of the functions in the embodiments described in the present disclosure, or may have the function of separately implementing any of the embodiments described in the present disclosure. The functions may be implemented through hardware or by executing corresponding software through hardware. The hardware or software includes one or more units or modules corresponding to the above functions.

In one implementation, the communication apparatus may include a transceiving module and a processing module, in which the processing module is configured to support the communication apparatus to perform the corresponding functions in the above method. The transceiving module is used to support communication between the communication apparatus and other devices. The communication apparatus may also include a storage module for coupling with the transceiving module and the processing module, which stores necessary computer programs and data for the communication apparatus.

For example, the processing module may be a processor, the transceiving module may be a transceiver or communication interface, and the storage module may be a memory.

According to a fourth aspect, embodiments of the present disclosure provide another communication apparatus. The communication apparatus has some or all of the functions of the terminal in the method examples described in the second aspect above. For example, the communication apparatus may have some or all of the functions in the embodiments described in the present disclosure, or may have the function of separately implementing any of the embodiments described in the present disclosure. The functions may be implemented through hardware or by executing corresponding software through hardware. The hardware or software includes one or more units or modules corresponding to the above functions.

In one implementation, the communication apparatus may include a transceiving module and a processing module, in which the processing module is configured to support the communication apparatus to perform the corresponding functions in the above method. The transceiving module is used to support communication between the communication apparatus and other devices. The communication apparatus may also include a storage module for coupling with the transceiving module and the processing module, which stores necessary computer programs and data for the communication apparatus.

For example, the processing module may be a processor, the transceiving module may be a transceiver or communication interface, and the storage module may be a memory.

According to a fifth aspect, embodiments of the present disclosure provide a communication apparatus. The communication apparatus includes a processor, and when the processor calls a computer program stored in a memory, the method according to the above first aspect is implemented.

According to a sixth aspect, embodiments of the present disclosure provide a communication apparatus. The communication apparatus includes a processor, and when the processor calls a computer program stored in a memory, the method according to the above second aspect is implemented.

According to a seventh aspect, embodiments of the present disclosure provide a communication apparatus. The communication apparatus includes a processor and a memory, the memory is stored with a computer program, and the processor executes the computer program stored in the memory to cause the communication apparatus to execute the method according to the above first aspect.

According to an eighth aspect, embodiments of the present disclosure provide a communication apparatus. The communication apparatus includes a processor and a memory, the memory is stored with a computer program, and the processor executes the computer program stored in the memory to cause the communication apparatus to execute the method according to the above second aspect.

According to a ninth aspect, embodiments of the present disclosure provide a communication apparatus. The communication apparatus includes a processor and an interface circuit; the interface circuit is used for receiving code instructions and transmitting the code instructions to the processor, and the processor is used for running the code instructions to cause the apparatus to execute the method according to the above first aspect.

According to a tenth aspect, embodiments of the present disclosure provide a communication apparatus. The communication apparatus includes a processor and an interface circuit; the interface circuit is used for receiving code instructions and transmitting the code instructions to the processor, and the processor is used for running the code instructions to cause the apparatus to execute the method according to the above second aspect.

According to an eleventh aspect, embodiments of the present disclosure provide a computer-readable storage medium. The computer-readable storage medium is used for storing instructions used in the above receiving device. When the instructions are executed, the receiving device is configured to execute the method according to the above first aspect.

According to a twelfth aspect, embodiments of the present disclosure provide a computer-readable storage medium. The computer-readable storage medium is used for storing instructions used in the above sending device. When the instructions are executed, the sending device is configured to execute the method according to the above second aspect.

### BRIEF DESCRIPTION OF THE DRAWINGS

In order to clearly illustrate technical solutions in embodiments of the disclosure or background, a brief description of accompanying drawings to be used in embodiments or background is given below.
FIG. 1 is a schematic diagram illustrating an architecture of a communication system according to an embodiment of the present disclosure.
FIG. 2 is a schematic flow chart illustrating a method for sending an additional DMRS according to an embodiment of the present disclosure.
FIG. 3 is a schematic flow chart illustrating a method for sending an additional DMRS according to an embodiment of the present disclosure.
FIG. 4 is a schematic flow chart illustrating a method for sending an additional DMRS according to an embodiment of the present disclosure.
FIG. 5 is a schematic flow chart illustrating a method for sending an additional DMRS according to an embodiment of the present disclosure.
FIG. 6 is a schematic flow chart illustrating a method for sending an additional DMRS according to an embodiment of the present disclosure.
FIG. 7 is a schematic flow chart illustrating a method for sending an additional DMRS according to an embodiment of the present disclosure.
FIG. 8 is a schematic flow chart illustrating a method for sending an additional DMRS according to an embodiment of the present disclosure.
FIG. 9 is a schematic flow chart illustrating a method for sending an additional DMRS according to an embodiment of the present disclosure.
FIG. 10 is a schematic diagram illustrating a communication apparatus according to an embodiment of the present disclosure.
FIG. 11 is a schematic diagram illustrating a communication apparatus according to an embodiment of the present disclosure.
FIG. 12 is a schematic diagram illustrating a chip according to an embodiment of the present disclosure.

### DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following embodiments do not represent all implementations consistent with the disclosure. Instead, they are merely examples of apparatuses and methods consistent with aspects of embodiments of the disclosure as detailed in the appended claims.

The terms used in embodiments of this disclosure is only for the purpose of describing a specific embodiment and is not intended to limit embodiments of this disclosure. The singular forms of "one" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although terms first, second, third, etc. may be used to describe various information in embodiments of this disclosure, these terms should not be limited to them. These terms are only used to distinguish information of the same type from each other. For example, without departing from the scope of embodiments of this disclosure, the first information may also be referred to as the second information, and similarly, the second information may also be referred to as the first information. Depending on the context, the word 'if' used here can be interpreted as' when 'or' in case that 'or' in response to a determination '.

For the purpose of simplicity and ease of understanding, the terms used in this article to characterize size relationships are "greater than" or "less than", "higher than" or "lower than". But for those skilled in the art, it can be understood that the term "greater than" also encompasses the meaning of "greater than or equal to", and "less than" also encompasses the meaning of "less than or equal to"; the term 'higher than' encompasses the meaning of 'higher than or equal to', and 'lower than' also encompasses the meaning of 'lower than or equal to'.

For ease of understanding, terms involved in the present disclosure are first introduced.

### 1. Modulation Reference Signal (DMRS)

In modern wireless communication systems, a DMRS is used as a training sequence for data signal demodulation at a receiving end of wireless communication, for channel estimation of wireless channels and coherent demodulation of wireless signals.

In order to better understand a transmission method of an additional DMRS disclosed in the embodiments of the present disclosure, the communication system applicable to the embodiments of the present disclosure is described first.

An embodiment of the present disclosure provides a communication system, which may include but is not limited to a sending device and a receiving device. Optionally, the sending device can be a network device and the receiving device can be a terminal.

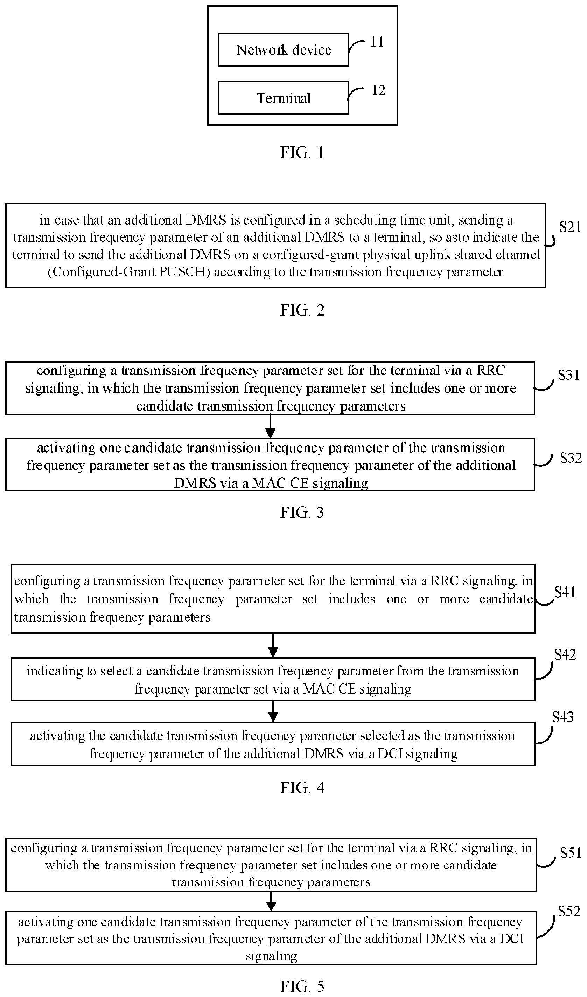

Reference is made to FIG. 1, which is a schematic diagram of an architecture of a communication system provided in an embodiment of the present disclosure. The communication system may include, but is not limited to, one network device and one terminal. The number and form of devices shown in FIG. 1 are for example only and do not constitute a limitation on the embodiments of the present disclosure. In practical applications, it may include two or more network devices and two or more terminals. The communication system shown in FIG. 1 includes one network device 11 and one terminal 12 as an example.

It should be noted that the technical solution of the present embodiment may be applied to various communication systems. For example, Long Term Evolution (LTE) systems, 5th generation (5G) mobile communication systems, 5G new radio (NR) systems, or other future new mobile communication systems.

The network device 11 in embodiments of the present disclosure is an entity on the network side used for transmitting or receiving signals. For example, network device 11 may be an evolved NodeB (eNB), a transmission reception point (TRP), a next generation NodeB (gNB) in an NR system, a base station in other future mobile communication systems, or an access node in a wireless communication (Wi-Fi^{™}) system. The embodiments of the present disclosure do not limit the specific technology and device form adopted by network devices. The network device provided in the embodiments of the present disclosure may be composed of a central unit (CU) and a distributed unit (DU), where the CU may also be referred to as a control unit. By adopting a CU-DU structure, protocol layers of the network device such as the base station may be split, functions of some protocol layers are centrally controlled by the CU, functions of the remaining part or all the protocol layers are distributed in the DU, and the CU centrally controls the DU.

The terminal 12 in embodiments of the present disclosure is an entity on the user side used for receiving or transmitting signals, such as a mobile phone. The terminal may also be referred to as a terminal, a user equipment (UE), a mobile stations (MS), a mobile terminal (MT), etc. The terminal may be a communication enabled car, a smart car, a mobile phone, an IoT devices such as an NB IoT or (e) MTC, a wearable device, a tablet, a computer with wireless transmission and reception capabilities, a virtual reality (VR) terminal, an augmented reality (AR) terminal, a wireless terminal in industrial control, a wireless terminal in autonomous driving, a wireless terminal in remote medical surgery, a wireless terminal in smart grids, and a wireless terminal in transportation safety, a wireless terminal in smart city, a wireless terminal in smart home, and so on. The embodiments of the present disclosure do not limit the specific technology and specific device form adopted by the terminal.

It should be understood that the communication system described in the embodiments of the disclosure is for the purpose of illustrating the technical solutions of the embodiments of the disclosure more clearly and does not constitute a limitation on the technical solutions of the embodiments of the disclosure. For those skilled in the art, with the evolution of the system architecture and the emergence of the new service scenario, the technical solutions of the embodiments of the disclosure are also applicable to similar technical problems.

A detailed introduction to a sending method and device of an additional DMRS provided in this disclosure will be provided in combination with the accompanying drawings.

Reference is made to FIG. 2, which is a schematic flow diagram of a method for sending an additional DMRS provided in an embodiment of the present disclosure. As shown in FIG. 2, the method includes but is not limited to the following steps.

At step S21, in case that an additional DMRS is configured in a scheduling time unit, a transmission frequency parameter of an additional DMRS is sent to a terminal, to indicate the terminal to send the additional DMRS on a Configured-Grant Physical Uplink Shared Channel (Configured-Grant PUSCH) according to the transmission frequency parameter.

The scheduling time refers to transmission time after a Configured-Grant PUSCH is activated and is in terms of time slots. A unit of the scheduling time may be either a slot or a symbol. For example, a DMRS may be transmitted on specific symbols within a time slot, such as symbol # 2 or symbol # 3. A terminal sends a DMRS to a network device within a scheduling time unit, and the DMRS may include a front load DMRS and an additional DMRS. Among them, a position of the front load DMRS should be as close as possible to a starting point of scheduling. In addition to the front load DMRS, in a medium/high speed scenario, the scheduling time unit may also include the additional DMRS to improve the accuracy of channel estimation.

The DMRS may be used for channel estimation of a wireless channel, and in a medium/high speed scenario, in addition to the front load DMRS reference signal (front-load DMRS), more DMRS symbols should be inserted during the scheduling to meet an estimation accuracy of a time-varying characteristic of the channel. A DMRS structure that combines the front load DMRS with the additional DMRS with a configurable time-domain density is adopted in a 5G new radio (NR) system. By configuring the additional DMRS, the accuracy of the channel estimation may be improved. Depending on a specific scenario, up to three sets of additional DMRS may be configured in each scheduling duration unit. In medium/low-speed scenarios, the transmission of the DMRS may lead to a huge transmission overhead, and a system performance and a transmission efficiency are reduced. Therefore, the network device may send a transmission frequency parameter of the additional DMRS to the terminal to reduce the number of transmissions of the additional DMRS and to reduce an overhead.

Optionally, the transmission parameter is used for reducing the number of transmissions of the additional DMRS. It should be noted that in this embodiment, the transmission frequency of the additional DMRS may be configured to be lower than the transmission frequency of the front load DMRS, applicable to type 1 and type 2 Configure-Grant PUSCH transmission. Optionally, the transmission frequency parameter of the additional DMRS includes at least one of following parameters.

A transmission cycle of the additional DMRS, in which the transmission cycle of the additional DMRS is greater than or equal to a transmission cycle of a front load DMRS.

A transmission frequency density of the additional DMRS, in which the transmission frequency density is used for indicating the terminal to configure a transmission frequency of the additional DMRS to be lower than or equal to a transmission frequency of the front load DMRS. As a possible implementation, the transmission frequency density may be represented in a form of density multiples. For example, the transmission frequency density may be configured as {1, 2, 3, ... n}, where n represents the additional DMRS is transmitted once every n transmissions.

Indicating information of predefined transmission frequency configuration enable switch, in which the additional DMRS is transmitted in case that the predefined transmission frequency is enabled. As a possible implementation, a transmission frequency may be predefined and the predefined transmission frequency may be used to transmit the DMRS. To reduce the transmission frequency of the DMRS, enable switch indication information may be configured for the predefined transmission frequency. When the transmission frequency is enabled, the predefined transmission frequency may be used to transmit the additional DMRS, that is, the additional DMRS is transmitted when the predefined transmission frequency is enabled.

The transmission frequency parameter may be sent separately to the terminal, or combined and sent to the terminal. For example, the transmission frequency parameter may include: a transmission cycle of the additional DMRS; the transmission frequency parameter may also include: the transmission cycle of the additional DMRS and the transmission frequency density of the additional DMRS; the transmission frequency parameter may also include: the transmission cycle of the additional DMRS, the transmission frequency density of the additional DMRS and predefined transmission frequency configuration enable switch indication information.

In embodiments of the present disclosure, the network device sends the transmission frequency parameter of the additional DMRS to the terminal via a signaling.

In some implementations, the network device sends the transmission frequency parameter of the additional DMRS to the terminal via a radio control resource (RRC) signaling. For example, the network device may add a direct configuration of periodicity_AdditionalDMRS in ConfiguredGrantConfig IE of the RRC signaling, and the periodicity_AdditionalDMRS is used for configuring the transmission frequency parameter of the additional DMRS separately.

In some other implementations, the network device sends the transmission frequency parameter of the additional DMRS to the terminal via a media access control control element MAC CE signaling.

In some other implementations, the network device sends the transmission frequency parameter of the additional DMRS to the terminal via a downlink control information (DCI) signaling.

Optionally, the network device may also indicate to the terminal that the additional DMRS is configured within the scheduling time unit when sending a transmission frequency parameter set. It should be noted that, in response to only a default transmission frequency parameter of the DMRS being configured in DMRS configuration information and the transmission frequency parameter of the additional DMRS being default, the transmission frequency parameter of the additional DMRS is configured to be the same as the default transmission frequency parameter of the DMRS.

Embodiments of present disclosure provide a method for sending the additional DMRS. By sending information to the terminal, the terminal may send the additional DMRS on the CG PUSCH according to the transmission frequency parameter of the additional DMRS indicated by the network device. Thus, it is possible to reduce the transmission frequency of the additional DMRS when channel changes are relatively less severe and a moving speed is medium or low, thereby reducing a transmission overhead and improving a system performance and a transmission efficiency.

Reference is made to FIG. 3, which is a schematic flow chart of a method for sending an additional DMRS provided in an embodiment of the present disclosure. As shown in FIG. 3, the method is performed by a network device. The method includes but is not limited to the following steps.

At step S31, a transmission frequency parameter set is configured for the terminal via a RRC signaling. The transmission frequency parameter set includes one or more candidate transmission frequency parameters.

A transmission frequency parameter set is configured for the terminal in this embodiment. The transmission frequency parameter set includes one or more candidate transmission frequency parameters. For example, the transmission frequency parameter set may include one or more transmission cycles of the additional DMRS. For example, the transmission frequency parameter set may include one or more transmission frequency densities of the additional DMRS. For example, the transmission frequency parameter set may include one or more pieces of indicating information of predefined transmission frequency configuration enable switch. The transmission frequency parameter set may also be a combination of the above parameters. For example, the transmission frequency parameter set may include: one or more transmission cycles of the additional DMRS, one or more transmission frequency densities of the additional DMRS, and one or more pieces of predefined transmission frequency configuration enable switch indication information.

At step S32, one candidate transmission frequency parameter in the transmission frequency parameter set is activated via a MAC CE signaling as the transmission frequency parameter of the additional DMRS.

In the embodiment, one candidate transmission frequency parameter in the transmission frequency parameter set is selected and activated via a MAC CE signaling as the transmission frequency parameter of the additional DMRS. For example, when the transmission parameter set includes multiple transmission densities of the additional DMRS D={ 1, 2, 3, 4, 5}, D=2 may be activated via the MAC CE signaling as the transmission frequency parameter of the additional DMRS.

Optionally, the MAC CE signaling may directly indicate the candidate frequency parameter activated, the MAC CE signaling may also indicate the candidate frequency parameter activated via identification information. A correspondence between the identification information and the candidate frequency parameter may be obtained via a network configuration or pre-configuration.

Optionally, the network device may also indicate to the terminal that the additional DMRS is configured in a scheduling time unit when transmitting a transmission frequency set. It should be noted that, in response to only a default transmission frequency parameter of the DMRS being configured in DMRS configuration information and the transmission frequency parameter of the additional DMRS being default, the transmission frequency parameter of the additional DMRS is configured to be the same as the default transmission frequency parameter of the DMRS.

Embodiments of present disclosure provide a method for sending the additional DMRS. The network device configures a transmission frequency parameter set for the terminal via a RRC signaling, and activates the candidate transmission frequency parameter currently selected via the MAC CE signaling. This allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed.

Reference is now made to FIG. 4, which is a schematic flow chart of a method for sending an additional DMRS provided in an embodiment of the present disclosure. As shown in FIG. 4, the method is performed by a network device. The method may include but is not limited to the following steps.

At step S41, a transmission frequency parameter set is configured for the terminal via a RRC signaling. The transmission frequency parameter set includes one or more candidate transmission frequency parameters.

Regarding an implementation of step S41, any implementation method from embodiments of the present disclosure may be used, and will not be repeated here.

At step S42, a candidate frequency parameter is indicated to be selected from the transmission frequency parameter set via a MAC CE signaling.

In this embodiment, a candidate frequency parameter is selected from the transmission frequency parameter set via the MAC CE signaling. For example, when the transmission parameter set includes multiple transmission densities of the additional DMRS D={ 1, 2, 3, 4, 5}, the candidate frequency parameter D=2 may be selected via the MAC CE signaling.

Optionally, the MAC CE signaling may indicate to the terminal directly the candidate frequency parameter selected, the MAC CE signaling may also indicate the candidate frequency parameter selected via identification information. A correspondence between the identification information and the candidate frequency parameter may be obtained via a network configuration or pre-configuration.

At step S43, the candidate transmission frequency parameter selected is activated via a DCI signaling as the transmission frequency parameter of the additional DMRS.

A previously selected candidate transmission frequency parameter is activated via a DCI signaling as the transmission frequency parameter of the additional DMRS.

Optionally, the network device may also indicate to the terminal that the additional DMRS is configured in a scheduling time unit when transmitting a transmission frequency set. It should be noted that, in response to only a default transmission frequency parameter of the DMRS being configured in DMRS configuration information and the transmission frequency parameter of the additional DMRS being default, the transmission frequency parameter of the additional DMRS is configured to be the same as the default transmission frequency parameter of the DMRS.

Embodiments of present disclosure provide a method for sending the additional DMRS. The network device configures a transmission frequency parameter set for the terminal via a RRC signaling, selects a candidate transmission frequency parameter via a MAC CE signaling and activates the candidate transmission frequency parameter selected via a DCI signaling. This allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed. The indication and application of the transmission frequency parameter may be asynchronous, which improves a flexibility of a frequency switching.

Reference is made to FIG. 5, which is a schematic flow chart of a method for sending an additional DMRS provided in an embodiment of the present disclosure. As shown in FIG. 5, the method is performed by a network device. The method may include but is not limited to the following steps.

At step S51, a transmission frequency parameter set is configured for the terminal via a RRC signaling. The transmission frequency parameter set includes one or more candidate transmission frequency parameters.

Regarding an implementation of step S51, any implementation method from embodiments of the present disclosure may be used, and will not be repeated here.

At step S52, one candidate transmission frequency parameter in the transmission frequency parameter set is activated via a downlink control information DCI signaling as the transmission frequency parameter of the additional DMRS.

In the embodiment, one candidate transmission frequency parameter in the transmission frequency parameter set is selected and activated via the DCI signaling as the transmission frequency parameter of the additional DMRS. For example, when the transmission parameter set includes multiple transmission densities of the additional DMRS D= f 1, 2, 3, 4, 5}, D=2 may be activated via the DCI signaling as the transmission frequency parameter of the additional DMRS.

Optionally, the DCI signaling may directly indicate the candidate frequency parameter activated, and the DCI signaling may also indicate the candidate frequency parameter activated via identification information. A correspondence between the identification information and the candidate frequency parameter may be obtained via a network configuration or pre-configuration.

Optionally, the network device may also indicate to the terminal that the additional DMRS is configured in a scheduling time unit when transmitting a transmission frequency set. It should be noted that, in response to only a default transmission frequency parameter of the DMRS being configured in DMRS configuration information and the transmission frequency parameter of the additional DMRS being default, the transmission frequency parameter of the additional DMRS is configured to be the same as the default transmission frequency parameter of the DMRS.

Embodiments of present disclosure provide a method for sending the additional DMRS. The network device configures a transmission frequency parameter set for the terminal via a RRC signaling, and activates the candidate transmission frequency parameter selected via a DCI signaling. This allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed.

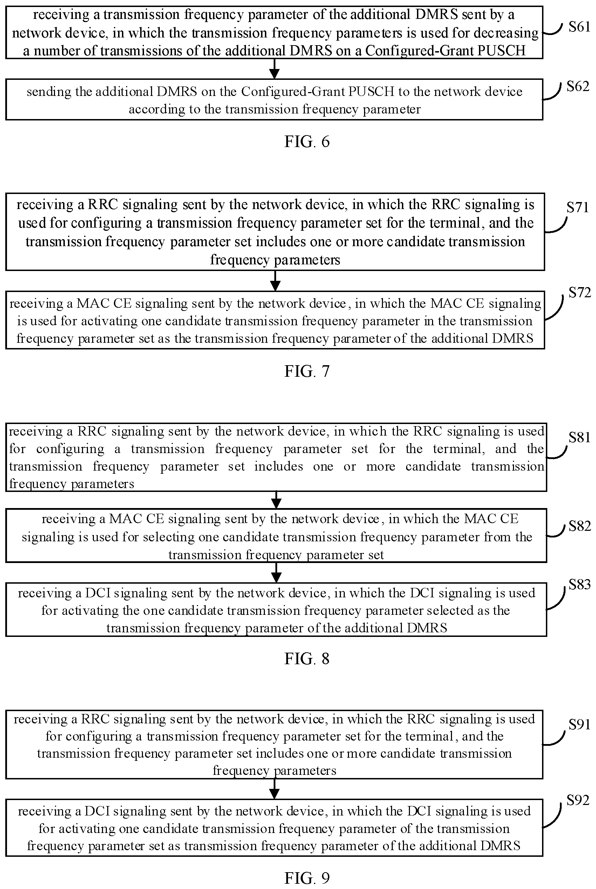

Reference is made to FIG. 6, which is a schematic flow chart of a method for sending an additional DMRS provided in an embodiment of the present disclosure. As shown in FIG. 6, the method is performed by a terminal. The method may include but is not limited to the following steps.

At step S61, a transmission frequency parameter sent by a network device is received. The transmission frequency parameter is used for reducing a number of transmissions of an additional DMRS on a Configured-Grant PUSCH.

The terminal may receive the transmission frequency parameter of the additional DMRS sent by the network device to reduce the number of transmissions of the additional DMRS and to reduce an overhead. It should be noted that in this embodiment, the transmission frequency of the additional DMRS may be configured to be lower than the transmission frequency of the front load DMRS, applicable to type 1 and type 2 Configure-Grant PUSCH transmission. The front load DMRS appears once in each scheduling time unit, and the scheduling time unit may be a slot or a symbol. For example, the front load DMRS may be transmitted on a specific symbol in a slot, such as symbol # 2 or symbol # 3.

Optionally, the transmission frequency parameter of the additional DMRS includes at least one of the following parameter.

A transmission cycle of the additional DMRS, in which the transmission cycle of the additional DMRS is greater than or equal to a transmission cycle of a front load DMRS.

A transmission frequency density of the additional DMRS, in which the transmission frequency density is used for indicating the terminal to configure a transmission frequency of the additional DMRS to be lower than or equal to a transmission frequency of the front load DMRS. As a possible implementation, the transmission frequency density may be represented in a form of density multiples. For example, the transmission frequency density may be configured as {1,2,3,... n}, where n represents the additional DMRS is transmitted once every n transmissions.

Indicating information of predefined transmission frequency configuration enable switch, in which the additional DMRS is transmitted in case that the predefined transmission frequency is enabled. As a possible implementation, a transmission frequency may be predefined and the predefined transmission frequency may be used to transmit the DMRS. To reduce the transmission frequency of the DMRS, enable switch indication information may be configured for the predefined transmission frequency. When the transmission frequency is enabled, the predefined transmission frequency may be used to transmit the additional DMRS, that is, the additional DMRS is transmitted when the predefined transmission frequency is enabled.

The transmission frequency parameter received by the terminal may include one or more of the above transmission frequency parameters. For example, the transmission frequency parameter may include: the transmission cycle of the additional DMRS; the transmission frequency parameter may also include: the transmission cycle of the additional DMRS and the transmission frequency density of the additional DMRS; the transmission frequency parameter may also include: the transmission cycle of the additional DMRS, the transmission frequency density of additional DMRS and predefined transmission frequency configuration enable switch indication information.

In embodiments of the present disclosure, the terminal receives a signaling sent by the network device. The signaling is used for sending the transmission frequency parameter of the additional DMRS to the terminal.

In some implementations, the terminal receives a RRC signaling, and the RRC signaling is used for sending transmission frequency parameter of the additional DMRS to the terminal. For example, the network device may add a direct configuration of periodicity_AdditionalDMRS in ConfiguredGrantConfig IE of the RRC signaling, and the periodicity_AdditionalDMRS is used for configuring the transmission frequency parameter of the additional DMRS separately.

In some other implementations, the terminal receives a MAC CE signaling sent by the network device. The MAC CE signaling is used for sending the transmission frequency parameter of the additional DMRS to the terminal.

In some other implementations, the terminal receives a DCI signaling sent by the network device. The DCI signaling is used for sending the transmission frequency parameter of the additional DMRS to the terminal.

Optionally, the terminal may obtain information indicating that the additional DMRS is configured sent by the network device to the terminal when receiving the transmission frequency parameter. It should be noted that, in response to only a default transmission frequency parameter of the DMRS being configured in DMRS configuration information and the transmission frequency parameter of the additional DMRS being default, it is determined that the transmission frequency parameter of the additional DMRS is configured to be the same as the default transmission frequency parameter of the DMRS.

At step 62, the additional DMRS is sent to the network device on a Configured-Grant PUSCH according to the transmission frequency parameter.

The terminal may send the additional DMRS to the network device on a Configured-Grant PUSCH according to the transmission frequency parameter. As the transmission frequency parameter is used to reduce the number of transmissions of the additional DMRS, it may reduce a transmission overhead, improve a system performance and a transmission efficiency.

Embodiments of present disclosure provide a method for sending the additional DMRS. By receiving information sent by the network device, the terminal may send the additional DMRS on the CG PUSCH according to the transmission frequency parameter of the additional DMRS indicated by the network device. Thus, it is possible to reduce the transmission frequency of the additional DMRS when channel changes are relatively less severe and a moving speed is medium or low, thereby reducing a transmission overhead and improving a system performance and a transmission efficiency.

Reference is made to FIG.7, which is a schematic flow chart of a method for sending an additional DMRS provided in an embodiment of the present disclosure. As shown in FIG. 7, the method is performed by a terminal. The method includes but is not limited to the following steps.

At step S71, a RRC signaling is received from the network device. The RRC signaling is used for configuring a transmission frequency parameter set to the terminal. The transmission frequency parameter set includes one or more candidate transmission frequency parameters.

In this embodiment, the terminal receives the RRC signaling sent by the network device. The RRC signaling is used for configuring the transmission frequency parameter set to the terminal. The transmission frequency parameter set includes one or more candidate transmission frequency parameters. For example, the transmission frequency parameter set may include one or more transmission cycles of the additional DMRS. For example, the transmission frequency parameter set may include one or more transmission frequency densities of the additional DMRS. For example, the transmission frequency parameter set may include one or more pieces of indicating information of predefined transmission frequency configuration enable switch. The transmission frequency parameter set may also be a combination of the above parameters. For example, the transmission frequency parameter set may include: one or more transmission cycles of the additional DMRS, one or more transmission frequency densities of the additional DMRS, and one or more pieces of predefined transmission frequency configuration enable switch indication information.

At step 72, a MAC CE signaling is received from the network device. The MAC CE signaling is used for activating one candidate transmission frequency parameter in the transmission frequency set as the transmission frequency parameter of the additional DMRS.

In this embodiment, the MAC CE signaling sent by the network device used for activating one candidate transmission frequency parameter in the transmission frequency set is received. For example, when the transmission parameter set includes multiple transmission densities of the additional DMRS D={ 1, 2, 3, 4, 5}, D=2 may be activated via the received MAC CE signaling as the transmission frequency parameter of the additional DMRS.

Optionally, the MAC CE signaling may directly indicate the candidate frequency parameter activated, the MAC CE signaling may also indicate the candidate frequency parameter activated via identification information. A correspondence between the identification information and the candidate frequency parameter may be obtained via a network configuration or pre-configuration.

Optionally, the terminal may obtain information indicating that the additional DMRS is configured sent by the network device to the terminal when receiving the transmission frequency parameter. It should be noted that, in response to only a default transmission frequency parameter of the DMRS being configured in DMRS configuration information and the transmission frequency parameter of the additional DMRS being default, it is determined that the transmission frequency parameter of the additional DMRS is configured to be the same as the default transmission frequency parameter of the DMRS.

Embodiments of present disclosure provide a method for sending the additional DMRS. The terminal receives the RRC signaling sent by the network device which is used for configuring the transmission frequency set. The terminal receives the MAC CE signaling sent by the network device which is used for activating one candidate transmission frequency parameter in the transmission frequency set as the transmission frequency parameter of the additional DMRS. In this way, it allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed.

Reference is made to FIG. 8, which is a schematic flow chart of a method for sending an additional DMRS provided in an embodiment of the present disclosure. As shown in FIG.8, the method is performed by a terminal. The method may include but is not limited to the following steps.

At step S81, a RRC signaling sent by the network device is received. The RRC signaling is used for configuring a transmission frequency parameter set to the terminal. The transmission frequency parameter set includes one or more candidate transmission frequency parameters.

Regarding an implementation of step S81, any implementation method from embodiments of the present disclosure may be used, and will not be repeated here.

At step S82, a MAC CE signaling sent by the network device is received. The MAC CE signaling is used for selecting one candidate transmission frequency parameter from the transmission frequency parameter set.

In this embodiment, the MAC CE signaling sent by the network device used for selecting one candidate transmission frequency parameter in the transmission frequency set is received. For example, when the transmission parameter set includes multiple transmission densities of the additional DMRS D={ 1, 2, 3, 4, 5}, the candidate frequency parameter D=2 may be selected via the received MAC CE signaling.

Optionally, the MAC CE signaling may indicate to the terminal directly the candidate frequency parameter selected, the MAC CE signaling may also indicate the candidate frequency parameter selected via identification information. A correspondence between the identification information and the candidate frequency parameter may be obtained via a network configuration or pre-configuration.

At step S83, a DCI signaling sent by the network device is received. The DCI signaling is used for activating the selected candidate transmission frequency parameter as a transmission frequency parameter of the additional DMRS.

The DCI signaling sent by the network device is received. A previously selected candidate frequency parameter may be activated via the DCI signaling as the transmission frequency parameter of the additional DMRS.

Optionally, the terminal may obtain information indicating that the additional DMRS is configured sent by the network device to the terminal when receiving the transmission frequency parameter. It should be noted that, in response to only a default transmission frequency parameter of the DMRS being configured in DMRS configuration information and the transmission frequency parameter of the additional DMRS being default, it is determined that the transmission frequency parameter of the additional DMRS is configured to be the same as the default transmission frequency parameter of the DMRS.

Embodiments of present disclosure provide a method for sending the additional DMRS. The terminal receives the RRC signaling sent by the network device which is used for configuring the transmission frequency set. The terminal receives the MAC CE signaling sent by the network device which is used for activating one candidate transmission frequency parameter in the transmission frequency set and receives the DCI signaling sent by the network device which is used for activating the candidate transmission frequency parameter selected as the transmission frequency parameter of the additional DMRS. In this way, it allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed. The indication and application of the transmission frequency parameter may be asynchronous, which improves a flexibility of a frequency switching.

Reference is made to FIG. 9, which is a schematic flow chart of a method for sending an additional DMRS provided in an embodiment of the present disclosure. As shown in FIG. 9, the method is performed by a terminal. The method may include but is not limited to the following steps.

At step S91, a RRC signaling sent by the network device is received. The RRC signaling is used for configuring a transmission frequency parameter set to the terminal. The transmission frequency parameter set includes one or more candidate transmission frequency parameters.

Regarding an implementation of step S91, any implementation method from embodiments of the present disclosure may be used, and will not be repeated here.

At step S92, a DCI signaling sent by the network device is received. The DCI signaling is used for activating one candidate frequency parameter in the transmission frequency parameter set as a transmission frequency parameter of the additional DMRS.

In this embodiment, the DCI signaling sent by the network device used for activating one candidate transmission frequency parameter in the transmission frequency set is received. For example, when the transmission parameter set includes multiple transmission densities of the additional DMRS D={1, 2, 3, 4, 5}, D=2 may be activated via the received MAC CE signaling as the transmission frequency parameter of the additional DMRS.

Optionally, the DCI signaling may directly indicate the candidate frequency parameter activated, and the DCI signaling may also indicate the candidate frequency parameter activated via identification information. A correspondence between the identification information and the candidate frequency parameter may be obtained via a network configuration or pre-configuration.

Optionally, the terminal may obtain information indicating that the additional DMRS is configured sent by the network device to the terminal when receiving the transmission frequency parameter. It should be noted that, in response to only a default transmission frequency parameter of the DMRS being configured in DMRS configuration information and the transmission frequency parameter of the additional DMRS being default, it is determined that the transmission frequency parameter of the additional DMRS is configured to be the same as the default transmission frequency parameter of the DMRS.

Embodiments of present disclosure provide a method for sending the additional DMRS. The terminal receives the RRC signaling sent by the network device which is used for configuring the transmission frequency set. The terminal receives the DCI signaling sent by the network device used for activating one candidate transmission frequency parameter in the transmission frequency parameter set as the transmission frequency parameter of the additional DMRS. In this way, it allows the terminal to send the additional DMRS on a CG PUSCH according to the transmission frequency parameter indicated by the network device, thereby reducing a transmission frequency of the additional DMRS, reducing a transmission overhead and improving a system performance and a transmission efficiency. Meanwhile, as the RRC signaling is configured with the transmission frequency parameter set, the transmission frequency may be switched among the candidate transmission frequency parameters, thereby avoiding a need to indicate a specific transmission frequency parameter for the additional DMRS every time the transmission frequency is changed.

In the above embodiments provided by the present disclosure, the methods provided by the embodiments are introduced from the perspectives of a terminal and a network device, respectively. In order to achieve the various functions provided in the embodiments of the present disclosure, a terminal and a network device may include hardware structures and software modules, which may be implemented in the form of hardware structures, software modules, or a combination of hardware structures and software modules. One of the above functions may be executed in the form of hardware structure, software module, or a combination of hardware structure and software module.

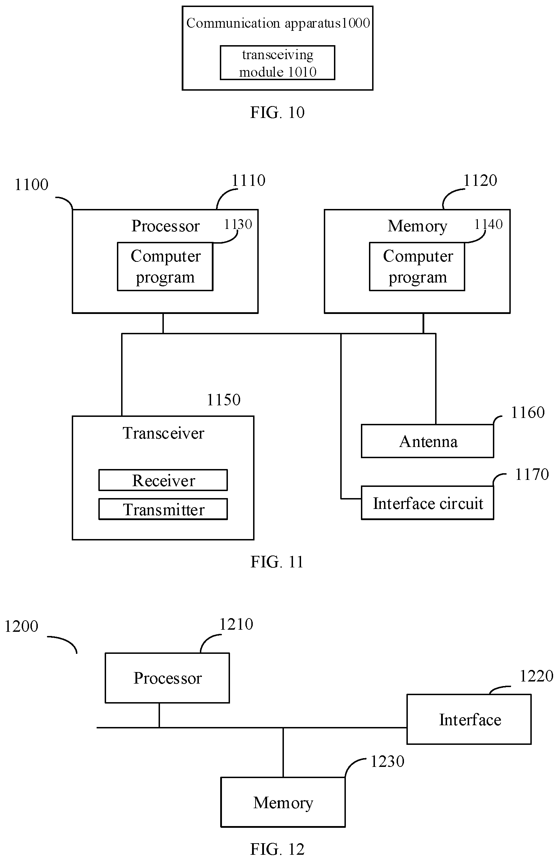

Reference is made to FIG. 10. FIG. 10 is a schematic diagram of a communication apparatus 1000 provided in the embodiments of the present disclosure. The communication apparatus 1000 shown in FIG. 10 includes a transceiving module 1010. The transceiving module 1010 may include a sending module and/or a receiving module. The sending module is configured to implement the sending function, and the receiving module is configured to implement the receiving function. The transceiving module 1010 may implement the sending function and/or the receiving function.

The communication apparatus 1000 can be a network device, an apparatus in a network device, or an apparatus capable of matching with a network device. Alternatively, the communication apparatus 1000 can be a terminal, an apparatus in a terminal, or an apparatus capable of matching with a terminal.

The communication apparatus 1000 is a network device and includes:
a transceiving module 1010, configured to: in case that an additional DMRS is configured in a scheduling time unit, send a transmission frequency parameter of the additional DMRS to a terminal, to indicate the terminal to send the additional DMRS on a configured-grant physical uplink shared channel (Configured-Grant PUSCH) according to the transmission frequency parameter. The transmission frequency parameter is used for reducing a number of transmissions of the additional DMRS.

Optionally, the transmission frequency parameter of the additional DMRS includes at least one of: a transmission cycle of the additional DMRS, in which the transmission cycle of the additional DMRS is greater than or equal to a transmission cycle of a front load DMRS; a transmission frequency density of the additional DMRS, in which the transmission frequency density is used for indicating the terminal to configure a transmission frequency of the additional DMRS to be lower than or equal to a transmission frequency of the front load DMRS; or indicating information of predefined transmission frequency configuration enable switch, in which the additional DMRS is transmitted in case that the predefined transmission frequency is enabled.

Optionally, the transceiving module 1010 is further configured to: send the transmission frequency parameter of the additional DMRS to the terminal via a signaling.

Optionally, the transceiving module 1010 is further configured to: send the transmission frequency parameter of the additional DMRS to the terminal via a radio control resource (RRC) signaling; or send the transmission frequency parameter of the additional DMRS to the terminal via a media access control-control element (MAC CE) signaling; or send the transmission frequency parameter of the additional DMRS to the terminal via a downlink control information (DCI) signaling.

Optionally, the transceiving module 1010 is further configured to: configure a transmission frequency parameter set for the terminal via a RRC signaling, in which the transmission frequency parameter set includes one or more candidate transmission frequency parameters; and activate one candidate transmission frequency parameter in the transmission frequency parameter set as the transmission frequency parameter of the additional DMRS via a MAC CE signaling.

Optionally, the transceiving module 1010 is further configured to: configure a transmission frequency parameter set for the terminal via a RRC signaling, in which the transmission frequency parameter set includes one or more candidate transmission frequency parameters; indicate to select a candidate transmission frequency parameter in the transmission frequency parameter set via a MAC CE signaling; and activate the selected candidate transmission frequency parameter as the transmission frequency parameter of the additional DMRS via a DCI signaling.

Optionally, the transceiving module 1010 is further configured to: configure a transmission frequency parameter set for the terminal via a RRC signaling, in which the transmission frequency parameter set includes one or more candidate transmission frequency parameters; and activate one candidate transmission frequency parameter in the transmission frequency parameter set as the transmission frequency parameter of the additional DMRS via a DCI signaling.

Optionally, in response to only a default transmission frequency parameter of a DMRS being configured in DMRS configuration information and the transmission frequency parameter the additional DMRS being default, the transmission frequency parameter of the additional DMRS is configured to be the same as the default transmission frequency parameter of the DMRS.

The communication apparatus 1000 is a terminal and includes a transceiving module 1010.

The transceiving module 1010 is configured to receive a transmission frequency parameter of the additional DMRS sent by a network device, in which the transmission frequency parameter is used for decreasing a number of transmissions of the additional DMRS on a Configured-Grant PUSCH; and send the additional DMRS on the Configured-Grant PUSCH to the network device according to the transmission frequency parameter.

Optionally, the transmission frequency parameter of the additional DMRS includes at least one of: a transmission cycle of the additional DMRS, in which the transmission cycle of the additional DMRS is greater than or equal to a transmission cycle of a front load DMRS; a transmission frequency density of the additional DMRS, in which the transmission frequency density is used for indicating the terminal to configure a transmission frequency of the additional DMRS to be lower than or equal to a transmission frequency of the front load DMRS; or indicating information of predefined transmission frequency configuration enable switch, in which the additional DMRS is transmitted in case that the predefined transmission frequency is enabled.

Optionally, the transceiving module 1010 is further configured to: receive a signaling sent by the network device, in which the signaling is used for sending the transmission frequency parameter of the additional DMRS to the terminal.

Optionally, the transceiving module 1010 is further configured to: receive a radio resource control (RRC) signaling sent by the network device, in which the RRC signaling is used for sending the transmission frequency parameter of the additional DMRS to the terminal; or receive a media access control-control element (MAC CE) signaling sent by the network device, in which the MAC CE signaling is used for sending the transmission frequency parameter of the additional DMRS to the terminal; or receive a downlink control information (DCI) signaling sent by the network device, in which the DCI signaling is used for sending the transmission frequency parameter of the additional DMRS to the terminal.

Optionally, the transceiving module 1010 is further configured to: receive a RRC signaling sent by the network device, in which the RRC signaling is used for configuring a transmission frequency parameter set to the terminal, in which the transmission frequency parameter set includes one or more candidate transmission frequency parameters; and receive a MAC CE signaling sent by the network device, in which the MAC CE signaling is used for activating one candidate transmission frequency parameter in the transmission frequency parameter set as the transmission frequency parameter of the additional DMRS.

Optionally, the transceiving module 1010 is further configured to: receive a RRC signaling sent by the network device, in which the RRC signaling is used for configuring a transmission frequency parameter set for the terminal, and the transmission frequency parameter set includes one or more candidate transmission frequency parameters; receive a MAC CE signaling sent by the network device, in which the MAC CE signaling is used for selecting one candidate transmission frequency parameter from the transmission frequency parameter set; and receive a DCI signaling sent by the network device, in which the DCI signaling is used for activating the one candidate transmission frequency parameter selected as the transmission frequency parameter of the additional DMRS.

Optionally, the transceiving module 1010 is further configured to: receive the RRC signaling sent by the network device, in which the RRC signaling is used for configuring a transmission frequency parameter set for the terminal, and the transmission frequency parameter set includes one or more candidate transmission frequency parameters; and receive a DCI signaling sent by the network device, in which the DCI signaling is used for activating one candidate transmission frequency parameter of the transmission frequency parameter set as the transmission frequency parameter of the additional DMRS.

Optionally, in response to only a default transmission frequency parameter of a DMRS being configured in the DMRS configuration information and the transmission frequency parameter of the additional DMRS being default, the transmission frequency parameter of the additional DMRS is determined to be the same as the default transmission frequency parameter of the DMRS.

Reference is made to FIG. 11. FIG. 11 is a schematic diagram of another communication apparatus 1000 provided in the embodiments of the present disclosure. The communication apparatus 1100 may be a terminal, a network device, a chip, chip system, or processor that supports the terminal to implement the above methods, or a chip, chip system, or processor that supports the network device to implement the above methods. This communication apparatus may be used to implement the methods described in the above method embodiments, which can be referred to in the description of the above method embodiments.

The communication apparatus 1100 may include one or more processors 1110. The processor 1110 may be a general-purpose processor, a dedicated processor, etc. For example, it may be a baseband processor or a central processing unit. The baseband processor may be used to process communication protocols and communication data, while the central processor may be used to control the communication apparatus (such as base stations, baseband chips, terminals, terminal chips, DUs, CUs, etc.), execute computer programs, and process data from computer programs.

Optionally, the communication apparatus 1100 may also include one or more memories 1120, on which computer programs 1140 may be stored. The processor 1110 executes the computer programs 1140 to cause the communication apparatus 1100 to perform the methods described in the above method embodiments. Optionally, data may also be stored in the memory 1120. The communication apparatus 1100 and the memory 1120 may be configured separately or integrated together.

Optionally, the communication apparatus 1100 may also include a transceiver 1150 and an antenna 1160. The transceiver 1150 may be referred to as a transceiving unit, transceiving component, or transceiving circuit, etc., used to implement transceiving functions. The transceiver 1150 may include a receiver and a transmitter, where the receiver may be referred to as a receiving unit, a receiving circuit, etc., used to implement the receiving function. The transmitter may be referred to as a transmitting unit, a transmitting circuit, etc., used to implement the transmitting function.

Optionally, the communication apparatus 1100 may also include one or more interface circuits 1170. The interface circuit 1170 is used to receive code instructions and transmit them to the processor 1110. The processor 1110 executes the code instructions to cause the communication apparatus 1100 to perform the methods described in the above method embodiments.

In one implementation, the processor 1110 may include a transceiver for implementing receiving and transmitting functions. For example, the transceiver may be a transceiving circuit, or an interface, or an interface circuit. The transceiving circuit, interface, or interface circuit used to implement the receiving and sending functions may be separate or integrated together. The above-mentioned transceiving circuit, interface or interface circuit may be used for reading and writing code/data, or the above-mentioned transceiving circuit, interface or interface circuit may be used for signal transmission or signal transferring.

In one implementation, the processor 1110 may store a computer program 1130, which runs on the processor 1110 to cause the communication apparatus 1100 to perform the methods described in the above method embodiments. The computer program 1130 may be solidified in the processor 1110, in which case the processor 1110 may be implemented by hardware.

In one implementation, the communication apparatus 1100 may include a circuit that can perform the functions of sending, receiving, or communicating as described in the aforementioned method embodiments. The processor and transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver may also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a terminal or a network device, but the scope of the communication apparatus described in the present disclosure is not limited to this, and the structure of the communication apparatus may not be limited by FIG. 11. The communication apparatus may be a standalone device or a part of a larger device. For example, the communication apparatus may be any of the following.
(1) Independent integrated circuit ICs, or chips, or chip systems or chip subsystems.
(2) A set of one or more ICs, optionally including storage components for storing data and computer programs.
(3) ASIC, such as modems.
(4) Modules that may be embedded in other devices.
(5) Receivers, terminals, intelligent terminals, cellular phones, wireless devices, handheld devices, mobile units, vehicle mounted devices, network devices, cloud devices, artificial intelligence devices, etc.
(6) Other devices and so on.

For the case where the communication apparatus may be a chip or a chip system, reference is made to the schematic diagram of the chip shown in FIG. 12. The chip shown in FIG. 12 includes a processor 1210 and an interface 1220. The number of processors 1210 may be one or more, and the number of interfaces 1220 may be more than one.

Optionally, the chip also includes a memory 1230 for storing necessary computer programs and data.

Those skilled in the art can also understand that various illustrative logical blocks and steps listed in the embodiments of the present disclosure may be implemented through electronic hardware, computer software, or a combination of both. Whether such functions are implemented through hardware or software depends on the specific application and the design requirements of the entire system. Those skilled in the art may use various methods to implement the described functions for each specific application, but such implementation should not be understood as exceeding the scope of protection of the embodiments of the present disclosure.

The embodiments of the present disclosure also provide a system for sending an additional DMRS, which includes a communication apparatus as a terminal and a communication apparatus as a network device in the embodiment shown in FIG. 10, or includes a communication apparatus as a terminal and a communication apparatus as a network device in the embodiment shown in FIG. 11.

The present disclosure also provides a computer-readable storage medium, on which instructions are stored. When the instructions are executed by a computer, the function according to any one of the above method embodiments is implemented.

The present disclosure also provides a computer program product. When the computer program product is executed by a computer, the function according to any one of the above method embodiments is implemented.

In the above embodiments, it may be fully or partially implemented through software, hardware, firmware, or any combination thereof. When implemented using software, it may be fully or partially implemented in the form of a computer program product. The computer program product includes one or more computer programs. When loading and executing the computer program on a computer, all or some of the processes or functions described in the embodiments of the present disclosure is generated. The computer may be a general-purpose computer, a specialized computer, a computer network, or other programmable devices. The computer program may be stored in a computer-readable storage medium or transmitted from one computer-readable storage medium to another. For example, the computer program may be transmitted from a website site, computer, server, or data center to another website site, computer, server, or data center in a wired (such as coaxial cables, fiber optics, digital subscriber lines (DSLs)) or non-wired (such as infrared, wireless, microwave, etc.) manner. The computer-readable storage medium may be any available medium that a computer may access, or a data storage device such as a server or data center that integrates one or more available media. The available media may be magnetic media (such as floppy disks, hard disks, magnetic tapes), optical media (such as high-density digital video discs (DVDs)), or semiconductor media (such as solid state disks (SSDs)).

Those skilled in the art may understand that the first, second, and other numerical numbers mentioned in the present disclosure are only for the convenience of description and are not intended to limit the scope of the embodiments of the present disclosure, but also indicate the order of priority.

At least one in the present disclosure may also be described as one or more, and multiple may be two, three, four, or more, without limitation in the present disclosure. In the embodiments of the present disclosure, for a kind of technical feature, the technical features in the kind of technical feature are distinguished by "first", "second", "third", "A", "B", "C", "D", etc. The technical features described with "first", "second", "third", "A", "B", "C", and "D" have no order of priority or size.

The correspondence shown in each table in the present disclosure may be configured or predefined. The values of the information in each table are only examples and may be configured as other values, which are not limited in the present disclosure. When configuring the correspondence between information and various parameters, it is not necessarily required to configure all the corresponding relationships shown in each table. For example, in the table of the present disclosure, the corresponding relationships shown in certain rows may not be configured. For example, appropriate variations and adjustments may be made based on the above table, such as splitting, merging, and so on. The titles in the above tables indicate that the names of the parameter may also be other names that the communication apparatus may understand, and the values or representations of the parameter may also be other values or representations that the communication apparatus may understand. The above tables may also be implemented using other data structures, such as arrays, queues, containers, stacks, linear tables, pointers, linked lists, trees, graphs, structures, classes, heaps, hash tables, etc.

The pre-definition in the present disclosure may be understood as definition, previous definition, storage, pre-storage, pre-negotiation, pre-configuration, solidification, or pre-firing.

Those skilled in the art may realize that the units and algorithm steps described in the embodiments disclosed herein can be implemented through electronic hardware, or a combination of computer software and electronic hardware. Whether these functions are executed in hardware or software depends on the specific application and design constraints of the technical solution. Professional technicians may use different methods to achieve the described functions for each specific application, but such implementation should not be considered as extending beyond the scope of the present disclosure.

Those skilled in the art may clearly understand that, for the sake of convenience and simplicity in description, regarding the specific working processes of the systems, devices, and units described above, reference may be made to the corresponding processes in the aforementioned method embodiments, which will not be repeated here.

The above is only a specific implementation of the present disclosure, but the scope of protection of the present disclosure is not limited to this. Any one skilled in the art may easily think of changes or replacements within the technical scope disclosed in the present disclosure, which should be included in the scope of protection of the present disclosure. Therefore, the scope of protection of the present disclosure should be based on the scope of protection of the claims.

## Claims

1. A method for sending an additional demodulation reference signal (DMRS), performed by a network device, comprising:
in case that an additional DMRS is configured in a scheduling time unit, sending a transmission frequency parameter of the additional DMRS to a terminal, so as to indicate the terminal to send the additional DMRS on a configured-grant physical uplink shared channel (Configured-Grant PUSCH) according to the transmission frequency parameter.

2. The method according to claim 1, wherein the transmission frequency parameter of the additional DMRS comprises at least one of:
a transmission cycle of the additional DMRS, wherein the transmission cycle of the additional DMRS is greater than or equal to a transmission cycle of a front load DMRS;
a transmission frequency density of the additional DMRS, wherein the transmission frequency density is used for indicating the terminal to configure a transmission frequency of the additional DMRS to be lower than or equal to a transmission frequency of the front load DMRS; or
indicating information of predefined transmission frequency configuration enable switch, wherein the additional DMRS is transmitted in case that the predefined transmission frequency is enabled.

3. The method according to claim 1 or claim 2, wherein sending the transmission frequency parameter of the additional DMRS to the terminal comprises:
sending the transmission frequency parameter of the additional DMRS to the terminal via a signaling.

4. The method according to claim 3, wherein sending the transmission frequency parameter of the additional DMRS to the terminal via a signaling comprises:
sending the transmission frequency parameter of the additional DMRS to the terminal via a radio control resource (RRC) signaling; or
sending the transmission frequency parameter of the additional DMRS to the terminal via a media access control-control element (MAC CE) signaling; or
sending the transmission frequency parameter of the additional DMRS to the terminal via a downlink control information (DCI) signaling.

5. The method according to claim 3, wherein sending the transmission frequency parameter of additional DMRS to the terminal comprises via a signaling comprises:
configuring a transmission frequency parameter set for the terminal via a RRC signaling, wherein the transmission frequency parameter set comprises one or more candidate transmission frequency parameters; and
activating one candidate transmission frequency parameter of the transmission frequency parameter set as the transmission frequency parameter of the additional DMRS via a MAC CE signaling.

6. The method according to claim 3, wherein sending transmission frequency parameter of the additional DMRS to the terminal via a signaling comprises:
configuring a transmission frequency parameter set for the terminal via a RRC signaling, wherein the transmission frequency parameter set comprises one or more candidate transmission frequency parameters;
indicating to select a candidate transmission frequency parameter from the transmission frequency parameter set via a MAC CE signaling; and
activating the candidate transmission frequency parameter selected as the transmission frequency parameter of the additional DMRS via a DCI signaling.

7. The method according to claim 3, wherein sending the transmission frequency parameter of the additional DMRS to the terminal via a signaling comprises:
configuring a transmission frequency parameter set for the terminal via a RRC signaling, wherein the transmission frequency parameter set comprises one or more candidate transmission frequency parameters; and
activating one candidate transmission frequency parameter of the transmission frequency parameter set as the transmission frequency parameter of the additional DMRS via a DCI signaling.

8. The method according to claim 1 or claim 2, further comprising:
in response to only a default transmission frequency parameter of a DMRS being configured in DMRS configuration information and the transmission frequency parameter of the additional DMRS being default, the transmission frequency parameter of the additional DMRS being the same as the default transmission frequency parameter of the DMRS.

9. A method for sending an additional demodulation reference signal (DMRS), performed by a terminal, comprising:
receiving a transmission frequency parameter of the additional DMRS sent by a network device, wherein the transmission frequency parameter is used for decreasing a number of transmissions of the additional DMRS on a Configured-Grant PUSCH; and
sending the additional DMRS on the Configured-Grant PUSCH to the network device according to the transmission frequency parameter.

10. The method according to claim 9, wherein the transmission frequency parameter of the additional DMRS comprises at least one of:
a transmission cycle of the additional DMRS, wherein the transmission cycle of the additional DMRS is greater than or equal to a transmission cycle of a front load DMRS;
a transmission frequency density of the additional DMRS, wherein the transmission frequency density is used for indicating the terminal to configure a transmission frequency of the additional DMRS to be lower than or equal to a transmission frequency of the front load DMRS; or
indicating information of predefined transmission frequency configuration enable switch, wherein the additional DMRS is transmitted in case that the predefined transmission frequency is enabled.

11. The method according to claim 9 or claim 10, wherein receiving a transmission frequency parameter of the additional DMRS sent by a network device comprises:
receiving a signaling sent by the network device, wherein the signaling is used for sending the transmission frequency parameter to the terminal.

12. The method according to claim 11, wherein receiving a signaling sent by the network device comprises:
receiving a radio resource control (RRC) signaling sent by the network device, wherein the RRC signaling is used for sending the transmission frequency parameter of the additional DMRS to the terminal; or
receiving a media access control-control element (MAC CE) signaling sent by the network device, wherein the MAC CE signaling is used for sending the transmission frequency parameter of the additional DMRS to the terminal; or
receiving a downlink control information (DCI) signaling sent by the network device, the DCI signaling is used for sending the transmission frequency parameter of the additional DMRS to the terminal.

13. The method according to claim 11, wherein receiving a signaling sent by the network device comprises:
receiving a RRC signaling sent by the network device, wherein the RRC signaling is used for configuring transmission frequency parameter set to the terminal, the transmission frequency parameter set comprises one or more candidate transmission frequency parameters; and
receiving a MAC CE signaling sent by the network device, wherein the MAC CE signaling is used for activating one candidate transmission frequency parameter in the transmission frequency parameter set as the transmission frequency parameter of the additional DMRS.

14. The method according to claim 11, wherein receiving a signaling sent by the network device comprises:
receiving a RRC signaling sent by the network device, wherein the RRC signaling is used for configuring a transmission frequency parameter set for the terminal, and the transmission frequency parameter set comprises one or more candidate transmission frequency parameters;
receiving a MAC CE signaling sent by the network device, wherein the MAC CE signaling is used for selecting one candidate transmission frequency parameter from the transmission frequency parameter set; and
receiving a DCI signaling sent by the network device, wherein the DCI signaling is used for activating the one candidate transmission frequency parameter selected as the transmission frequency parameter of the additional DMRS.

15. The method according to claim 11, wherein receiving a signaling sent by the network device comprises:
receiving a RRC signaling sent by the network device, wherein the RRC signaling is used for configuring a transmission frequency parameter set for the terminal, the transmission frequency parameter set comprises one or more candidate transmission frequency parameters; and
receiving a DCI signaling sent by the network device, wherein the DCI signaling is used for activating one candidate transmission frequency parameter of the transmission frequency parameter set as transmission frequency parameter of the additional DMRS.

16. The method according to claim 9 or claim 10, further comprising:
in response to only a default transmission frequency parameter of a DMRS being configured in the DMRS configuration information and the transmission frequency parameter of the additional DMRS being default, determining the transmission frequency parameter of the additional DMRS being the same as the default transmission frequency parameter of the DMRS.

17. A communication apparatus, comprising:
a transceiving module, used for sending a transmission frequency parameter of an additional DMRS to a terminal when the additional DMRS is configured in the scheduling time unit, to indicate the terminal to send the additional DMRS on a Configured-Grant Physical Uplink Shared Channel (Configured-Grant PUSCH) according to the transmission frequency parameter, wherein the transmission frequency parameter is used for decreasing the transmission times of the additional DMRS on Configured-Grant PUSCH.

18. A communication apparatus, comprising:
a transceiving module, used for receiving a transmission frequency parameter of an additional DMRS sent by a network device, wherein the transmission frequency parameter are used for decreasing a number of transmissions of the additional DMRS on a Configured-Grant PUSCH; and
sending the additional DMRS on a Configured-Grant Physical Uplink Shared Channel (Configured-Grant PUSCH) to the network device according to the transmission frequency parameter.

19. A communication apparatus, comprising a processor and a memory, wherein the memory is stored with a computer program, and the processor executes the computer program stored in the memory to cause the apparatus to execute the method according to any one of claims 1 to 8.

20. A communication apparatus, comprising a processor and a memory, the memory is stored with a computer program, and the processor executes the computer program stored in the memory to cause the apparatus to execute the method according to any one of claims 9 to 16.

21. A communication apparatus, comprising a processor and an interface circuit; wherein the interface circuit is used for receiving code instructions and transmitting the code instructions to the processor, and the processor is used for running the code instructions to execute the method according to any one of claims 1 to 8.

22. A communication apparatus, comprising a processor and an interface circuit; wherein the interface circuit is used for receiving code instructions and transmitting the code instructions to the processor, and the processor is used for running the code instructions to execute the method according to any one of claims 9 to 16.

23. A computer-readable storage medium, used for storing instructions, wherein when the instructions are executed, the method according to any one of claims 1 to 8 is implemented.

24. A computer-readable storage medium, used for storing instructions, wherein when the instructions are executed, the method according to any one of claims 9 to 16 is implemented.
